# EUROPEAN PATENT APPLICATION

(11) **EP 2 460 946 A1**
(43) Date of publication of application: **06.06.2012**
(21) Application number: 10832390.8
(22) Date of filing: 18.06.2010
(51) Int. Cl.: E04B 1/94, F16L 59/02, H02G 3/04

(54) **FIRE PROTECTION SYSTEM FOR ELECTRICAL WIRING AND INSTALLATION METHOD THEREFOR**

(71) Applicant: Kaefer Aislamentos SA, 48950 Erandio, Vizcaya (ES)
(72) Inventor: MARTÍN VARGAS, Christian, E-48950 Erandio Vizcaya (ES); SAUNIER NOVALI, Philippe, E-48950 Erandio Vizcaya (ES)
(74) Representative: Gonzalez-Alberto Rodriguez, Natalia
(86) International application number: PCT/ES2010/000215
(87) International publication number: WO 2011/157857

(57) **Abstract**

The present invention relates to a system for protection against fires for electrical wiring applicable to cables or groups of cables incorporated in a tray or not, which can incorporate a steel mesh with an insulating mat covering the entire length of the wiring, the attachment between the mats themselves and contiguous or adjacent mats defining transverse and/or longitudinal joints, preferably sealed by silicone. The system is also provided with ventilation and check means.

## Description

### Object of the Invention

The invention, a system for protection against fires for electrical wiring and method for installing same, relates to a covering system to protect wiring in case there is a fire in the installation in which the wiring is located, as well as the method for installing same.

The object of the invention particularly focuses on a covering system for cables, particularly for power, signal or communications cables used for wiring different electrically powered systems the operation of which during a fire are determining factors in minimizing the damage caused in the affected building, infrastructure or industry. The system for protection is designed as a passive/preventive system for protection to reduce in the first few moments of a fire its impact on electrical wiring, such that the power supply to the different systems is preserved for the longest possible time. Another object of the present invention is the method for installing said system for protection.

The field of application of the present invention is in the technical sector of the industry dedicated to installing passive systems for protection against fires, and particularly in the protection against the action of a possible hydrocarbon fire.

### Background of the Invention

As is known, (power or signal) cables require protection in order to work correctly when there is a fire, especially so that it is possible to actuate valves, actuators, smoke exhaust systems, automatic active systems for protection against fires and other devices necessary for reducing the damage caused or limiting the fire from spreading.

Until now, protection against fires for cables of this type has generally been by means of rigid plates, for example silicate fiber boards, which have the drawback of being difficult to install as well as its inappropriate weathering resistance, which generates doubts as to its long-term performance in the event a fire actually occurs.

Specifically, the main drawbacks of said type of protective covers are that the boards are rigid, which makes it difficult during installation to get the joints between them perfectly sealed, resulting in a tedious and complex assembly and a system the performance of which is highly conditioned by the labor. Furthermore, since the rigid boards usually contain organic binders, said boards must be covered with a layer of protective paint to prevent the surrounding area from degrading the material, particularly if said boards are exposed to the elements, thus making periodic maintenance of the entire system for protection for wiring necessary. The substantial weight of the rigid boards or deformations in the bearings of the trays cause deformations in the tray itself, so since the latter is a mechanical bearing of the system for protection, tensile, bending and torsional stresses are transmitted to the system for protection which the board is unable to absorb. For this reason, the system for protection is destroyed through the weaker part, corresponding with the joints, causing the system to open in said places or points and thus rendering the system for protection useless for its intended purpose.

In addition to the foregoing, the applicant is aware that there are systems for protection for wiring in the state of the art that are made up of a tray in which the cables are arranged and which is enveloped by an insulating flexible material in the form of a mat, which is in turn encapsulated in a layer of aluminum or another material. Said materials in the form of a mat are arranged enveloping the tray and the cables contained therein, and is secured on said tray by means of strips, straps, wires or others enveloping the mat to secure it.

However, it should be pointed out that the systems described above have important drawbacks, such as the fact that joints created between the main components of the fire-retardant system for protection, silicate fiber boards or fire-retardant mats do not assure its water-tightness or fire-resistance.

Likewise, said systems do not contemplate the existence of a practicable, reusable and fire-resistant inspection hatch for inspecting or installing future cables in the tray, nor do they incorporate any practical ventilation system which prevents temperature increases inside the tray, which temperature increases are common in electrical wiring.

In view of the foregoing, the present invention describes a system for protection for electrical wiring and a method for installing same to prevent the drawbacks existing in the systems used in the state of the art.

### Description of the Invention

In view of the foregoing drawbacks, a first object of the present invention is a system for protection against fires for the wiring in an installation, applicable on a cable, cables or groups of cables, arranged in a metal tray or not, which are covered with a steel mesh or not, and which is externally covered with at least one insulating flexible material in the form of a mat (hereinafter mat), preferably with ceramic fibers or with fire-retardant characteristics, fixed around the wiring by means of overlapping the ends of said mat or superimposing two mats. Therefore, in the event of deformation of the tray, the joint is assured since it is a flexible material and since the joint allows, without loosing tightness, relative displacements between the overlapping mats of up to 75 mm. Different superimposed mats are arranged to cover the entire course of the electrical wiring, sealing, when the wiring is exposed to atmospheric inclemencies, the overlaps between the mat and the superimpositions between mats with a non-flammable intumescent silicone which does not double its volume by more than 50% at temperatures greater than 150°C. By means of sealing the overlaps with intumescent silicone, the tightness of the joints between the mats is achieved, preventing the entrance of both water and the heat generated by the fire in the event of one occurring. The intumescence of silicone allows for the expansion thereof with heat, assures the sealing of the joint, but does not open the joint due to the characteristics of the silicone. Once silicone reaches its maximum volume, it starts to crystallize at 600°C, and withstands without degrading when it is subjected to 1100°C for at least 30 minutes.

Likewise, the system for protection for wiring, object of the present application, is provided with a ventilation system by means of screens which, since temperature increases are prevented, assures normal operation of the wiring and therefore of the electrical installation. Said screens are preferably made of an intumescent material, although the arrangement of another type of screens is also possible provided that they are fire-resistant. These screens are modified by finishing their perimeter with a metal frame which is fixed to a metal bearing installed on the tray, fixing it to the latter. The mat is placed on this screen, making a custom-made cavity for it and sealing the joint between mat and screen by means of fire-retardant silicone. Therefore, under fire conditions and at temperatures of approximately 150°C, the screen expands as a result of the metal frame incorporated to the screen, said expansion is not transmitted to the rest of the cover, especially to the mat, and the assembly does not become deformed because it would otherwise cause the occurrence of cracks or a break mainly in the joints between the screen and the mat, such that the tightness of the system against water and its fire resistance are maintained. In addition, the metal frame reinforces the concentration of the intumescence towards the inside of the screen and it is manufactured such that it does not create thermal bridges between the inside and the outside since it is built in two unconnected parts.

The ventilation screens are arranged in a staggered distribution, i.e., alternating their situation along the surfaces of the system for protection. When said screens are located on the upper surface of the system, a cap, canopy, or small covering is arranged to prevent the entrance of water.

In parallel, the proposed system has check means located every certain distance which allow easily and practically performing inspections or other actions on the electrical wiring system, such as introducing new wiring. To that end, according to the needs and dimensions of the installation, metal frames incorporated on a hole made for such purpose in the mat and in the mesh are arranged every certain number of meters. Said frame is covered with a second layer of ceramic mat and is fixed, for example by means of detachable strips, but without being sealed so as to allow its opening, making up for said lack of sealing by oversizing the mat with respect to the hole made in the mat.

The incorporation of the silicone is useful not only for sealing the mats to one another but also for sealing said mats with beams or other elements to overcome that are intercalated in the layout of the installation.

A second object of the present application consists of a method for installing the previously described system for protection.

A system for protection such as the one described, i.e., a system for protection for wiring surrounded by an insulating flexible material in the form of a mat, can be installed on cables, groups or bundles of cables, or trays of cables.

Typically, though not a requirement, wiring will be laid out on a metal tray, which can be exposed to the elements or not. If the tray is exposed to the elements, and to make the assembly somewhat rigid as well as to assure the runoff of water on the assembly, a metal mesh is arranged on said tray covering it, the mesh being able to be fixed to the tray or not. Said mesh can have different shapes, mainly depending on which way the water is to run out, i.e., gabled or lean-to type shape.

There are two different ways to install the mat. In a first way, sectors of mat which allow transversely enveloping the tray or wiring are cut, assuring a single overlap in the longitudinal joint, and applying an intumescent silicone such as the one described above in said joint to assure the tightness of the system, mainly in wiring arranged exposed to the elements. The following sector of mat is installed in the same way as the first but overlapping this sector on the first sector. On these new joints, it is also possible, and appropriate, to seal the joint with silicone,

The second way of installing it consists of arranging a complete mat on the lower face of the tray or wiring in the longitudinal direction, such that the sides of the mat cover the sides of the tray or wiring. Subsequently a complete mat is arranged on the upper face of the tray or wiring in the longitudinal direction, such that two joints are created by the overlap of the two mats. Like in the way of installing the mat described above, intumescent silicone is applied on each joint to assure the tightness of the system, mainly in wiring that is arranged exposed to the elements. The following mats are installed in the same way as the first two but overlapping the next ones on the first two. On these new joints, it is also possible, and appropriate, to seal the joint with silicone.

An alternative to overlapping mats or sectors of mats consists of placing two mats laterally facing one another, by butt joint, without overlap, and arranging on the joint an outer mat, covering said joint by means of overlap, also applying silicone in said overlap.

Once the mats are placed and to assure their position, mechanical securing means, such as strips, straps, wires or other equivalent means which fix said mats to the wiring or tray are arranged.

Likewise, it should be pointed out that the supports and bearings mechanically holding the trays or the wiring must also be protected against fire, which protection will previously be provided to the installation of the system for protection for the tray or wiring. Said protection mainly consists of covering and securing an insulating flexible material in the form of a mat around the bearing or support, mainly by means of strips, and if necessary, using intumescent silicone for sealing the joints. Once the bearings and supports are protected, the trays or wiring are then protected following the methods described above.

Once the system for protection for the different components is installed, the ventilation means and the check means are then made on the surface of the fire-retardant mat with the conditions described above.

To install the ventilation means, a hole of specific dimensions is made on the mat such that the wiring is in direct contact with the atmosphere, a screen, preferably made of an intumescent material and surrounded by a metal material, occupying said hole. Said ventilation means are arranged in a staggered distribution on the surfaces of the system for protection.

To install the check means, a method similar to the one described above is followed, but instead of placing a screen in the hole that was made, a metal frame is placed along the perimeter. To cover said check means, a second layer of ceramic mat is used and it is fixed, for example, by means of detachable strips, but it is not sealed so as to allow its opening, making up for said lack of sealing by oversizing the mat with respect to the hole made in the mat.

### Description of the Drawings

To complement the description being made and for the purpose of aiding to better understand the features of the invention, a set of drawings with an illustrative and non-limiting character is attached to the present specification as an integral part thereof.
Figure 1 depicts a perspective view of a portion of a wiring installation, made up of a group of cables housed in a tray in which an example of the protective cover object of the invention has been incorporated, having been depicted with sectors of mat transversely attached and partially sectioned in order to show the main parts and elements comprised therein, as well as the configuration and arrangement thereof.
Figure 2 depicts a perspective view similar to the one shown in the preceding figure, in this case with an example in which the pieces of mat are longitudinally attached.

### Preferred Embodiment of the Invention

In view of the aforementioned figures, and according to the numbering used, a preferred embodiment of the invention can be seen therein, comprising the parts and elements which are indicated and described in detail below.

As can be seen in said drawings, the system for protection against fires for electrical wiring proposed by the invention is applied to electrical cables or groups of electrical cables (1) incorporated in a tray (2), which in this embodiment is covered by a steel mesh (3) on which there is incorporated a covering of insulating flexible material or mat, preferably ceramic mat (4) externally enveloping the assembly along the entire length of the wiring, which in practice usually ranges between 40 m and 20 Km, though evidently any distance can be covered by means of this system, no matter how small or how large it is. Evidently, depending on the length of the wiring, it will be necessary to use more than one mat (4). The dimensions of the mats can be different depending on the course of wiring to be covered and the assembly conditions.

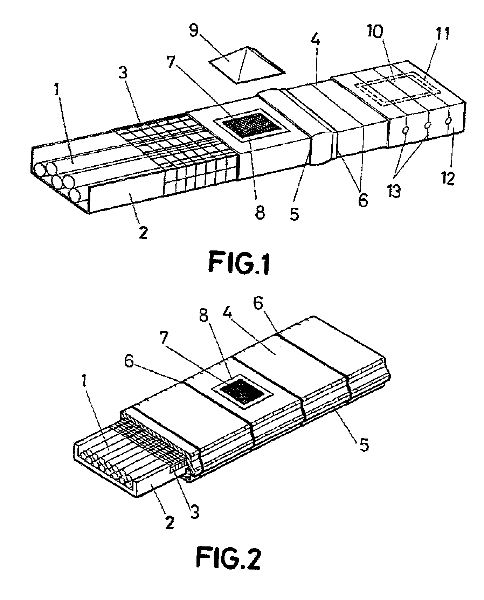

The insulating mats (4) to be used are, in the case of using mats containing mineral fiber, preferably of 128 Kg/m³ and have a thickness of 2", the superimposition of contiguous or adjacent mats or the overlap of the same mat having transverse (Figure 1) and/or longitudinal (Figure 2) joints (5), according to its arrangement, and being fixed at more or less regular intervals by mechanical fixing means, such as fixed strips or straps or equivalent elements (6). Said joints (5) are sealed with a system assuring the tightness thereof, comprising, on one hand, an overlap of at least 75 mm between contiguous or adjacent mats (4) as well as the incorporation of fire-retardant and intumescent silicone, specifically silicone of the type having an expansion which does not double its volume at temperatures greater than 150°C, in order to prevent that its expansion can open the joints, and of the type of silicone which crystallizes at 600°C and does not degrade for at least 30 minutes at 1100°C. The incorporation of this silicone will further serve for sealing the mats (4) to one another (5), for the attachment thereof with beams or other elements to overcome that are intercalated in the layout of the installation. Assuring said tightness prevents the wiring from being affected by atmospheric inclemencies when said wiring is located outdoors, and it prevents the heat or fire from directly affecting the wiring when the latter is indoors or outdoors.

The proposed system for protection is furthermore provided with ventilation means to prevent temperature increases but which can be sealed in the event of fire. Said ventilation means comprise ventilation screens (7) made of an intumescent material, which are finished with a metal frame (8) fixed to the ceramic mat (4) by means of the same type of fire-retardant silicone mentioned above that is used for the joints (5) of the pieces of mat. Thus, when there is a fire the intumescent material of the screens (7) expands, the ventilation being closed off but as a result of the metal frame (8), said expansion is not transmitted to the mat and the assembly does not deform. Said screens are preferably made with intumescent material, though it is also possible to arrange another type of screens provided that they are fire-resistant. These ventilation screens (7) are arranged along the installation, preferably in a staggered distribution, and can be incorporated in the upper part, on the sides, and in the lower part of the system for protection. However, when they are located in the upper part, as shown in the example of Figure 1, the screens incorporate a cap or canopy or small covering (9) preventing the entrance of water.

The system for protection herein described also has check means to perform inspections or other actions on the cables, said means being located every certain number of meters, according to the needs and dimensions of the installation, at least every 20 m, and comprising inspection hatch cavities (10) of preferably 400 mm x 400 mm made therein, i.e., in the ceramic mat (4) and in the mesh (3), which are perimetrically finished by means of metal edges (11). Said inspection hatch cavities (10) are covered with a second ceramic mat (12) which is fixed by means of detachable strips (13) being formed like a practicable cover (12), the dimension of said cover (12) being considerably greater than the larger side of the inspection hatch cavity (10) it covers in order to make up for the lack of sealing with the ceramic mat (4) thereunder, the width of said mat being at least 1100 mm versus the 400 mm of the inspection hatch cavity.

The system for protection against fires for wiring is installed using the following method:
- First, placing at least one sector of an insulating flexible material or fire-retardant mat on the supports or bearings of the wiring such that they are completely covered.
- Subsequently, placing at least one sector of an insulating flexible material or fire-retardant mat around the wiring,
- Then sealing the joints created between the sectors of insulating flexible material with an intumescent silicone, and
- Finally, placing mechanical fixing means, preferably strips, around the sectors of insulating flexible material or fire-retardant mats.

It should be pointed out that said wiring can be arranged inside a metal tray, which is mechanically supported by the supports or bearings, being able to arrange a metal mesh on said tray making the assembly formed by the tray and the wiring rigid. If the wiring is arranged inside a tray, the fire-retardant mat for covering said tray will be installed after covering the supports or bearings thereof.

There are at least two ways of covering the wiring or tray with the fire-retardant mat, in a first way, at least one sector of mat transversely envelops the wiring or tray, assuring a single overlap in the longitudinal joint. After its installation, said joint will be sealed with an intumescent resin. A second alternative way to cover the tray or wiring consists of arranging a complete mat on the lower face of the tray or wiring in the longitudinal direction, such that the sides of the mat cover the sides of the tray or wiring, to subsequently arrange a complete mat on the upper face of the tray or wiring in the longitudinal direction, such that two joints are created by the overlap of the two mats.

When placing sectors of mats or additional mats to be installed after the previously installed ones, such mats overlap.

The conditions of the installation must meet the requirements described above for the system for protection.

Once the system for protection of the different components is installed, the ventilation means and the check means are made on the surface of the fire-retardant mat with the conditions described above.

To install the ventilation means, a hole of specific dimensions is made on the mat such that the wiring is in direct contact with the atmosphere, a screen, preferably made of an intumescent material and surrounded by a metal material, occupying said hole. Said ventilation means are arranged in a staggered distribution on the surfaces of the system for protection.

To install the check means, a method similar to the one described above is followed, but instead of placing a screen in the hole that was made, a metal frame is placed along the perimeter To cover said check means, a second layer of ceramic mat is used and it is fixed, for example, by means of detachable strips, but it is not sealed so as to allow its opening, making up for said lack of sealing by oversizing the mat with respect to the hole made in the mat.

## Claims

1. A system for protection against fires for electrical wiring, of the type applicable to cables or groups of cables (1) used for the wiring in different electrically powered systems, said wiring at least being covered by at least one insulating flexible material or fire-retardant mat (4) covering the entire length of the wiring, **characterized in that** the mat (4) overlaps itself and/or is superimposed on mats contiguous or adjacent defining joints (5) sealed with non-flammable intumescent silicone to assure the tightness of the system and for said joints to absorb possible deformations without creating thermal bridge.

2. The system according to claim 1, **characterized in that** it comprises ventilation means preventing temperature increases in the wiring.

3. The system according to claim 1, **characterized in that** it comprises check means for inspecting the wiring.

4. The system according to claim 2, **characterized in that** the ventilation means comprise at least one screen (7) made of an intumescent material surrounded by a metal frame with thermal break (8) which is fixed to the perforated mat custom-made for the screen and sealing the joint between screen and mat (4) by means of a non-flammable intumescent silicone such that said frame (8) absorbs the expansions of the intumescent material, preventing the transmission thereof to the mat (4).

5. The system according to claim 3, **characterized in that** the check means comprise at least one cavity made in the ceramic mat (4) and perimetrically finished with metal edges, being covered by a second fire-retardant ceramic mat (12) fixed by detachable mechanical securing means (13) like a practicable cover.

6. The system according to claim 1, **characterized in that** the sealing of the joints (5) comprises an overlap of at least 75 mm between the contiguous or adjacent ceramic mats (4) absorbing the possible deformations of the tray assuring an insulated joint.

7. The system according to claim 1, **characterized in that** the fire-retardant intumescent silicone is of the type having an expansion which does not double its volume at temperatures greater than 150°C, and of the type which crystallizes at 600°C and does not degrade for at least 30 minutes at 1100°C.

8. The system according to claim 5, **characterized in that** the second mat (12) covering the hole (10) has a width of at least 1100 mm versus the 400 mm of said hole in order to make up for the lack of silicone sealing.

9. The system according to claim 4, **characterized in that** the ventilation screens (7) are arranged in a staggered distribution along the length of the wiring, having a cap or canopy (9) when they are installed in an upper part of the system to prevent the entrance of water.

10. A method for installing a system for protection against fires for wiring, of the type formed by at least one bearing or support of the wiring and the wiring itself, **characterized in that** it comprises the following phases:
a) Placing at least one sector of an insulating flexible material or fire-retardant mat on the supports or bearings of the wiring completely covering them,
b) Placing at least one sector of an insulating flexible material or fire-retardant mat around the wiring,
c) Sealing the joints created between the sectors of insulating flexible material with an intumescent silicone, and
d) Placing mechanical securing means around the sectors of insulating flexible material.

11. The method according to claim 10, **characterized in that** the wiring is arranged inside a metal tray, mechanically supported by the supports or bearings, prior to placing said at least one sector of insulating flexible material around the wiring.

12. The method according to claim 11, **characterized in that** once the wiring is arranged in the tray, a metal mesh is arranged on the latter to make the assembly rigid.

13. The method according to claims 10 to 12, **characterized in that** said at least one sector of mat transversely envelops the wiring or tray, assuring a single overlap in the longitudinal joint.

14. The method according to claims 10 to 12, **characterized in that** a complete mat is arranged on the lower face of the tray or wiring in the longitudinal direction, such that the sides of the mat cover the sides of the tray or wiring, to subsequently arrange a complete mat on the upper face of the tray or wiring in the longitudinal direction, such that two joints are created by the overlap of the two mats.

15. The method according to claims 13 or 14, **characterized in that** the sectors of mat or mats installed next overlap the previously installed ones.

16. The method according to claim 10, **characterized in that** for arranging ventilation means in the system, a hole of specific dimensions is made on the mat such that the wiring is in direct contact with the atmosphere, a screen (7), preferably made of an intumescent material and surrounded by a metal material, occupying said hole.

17. The method according to claim 10, **characterized in that** for arranging the check means in the system, a hole of specific dimensions is made on the mat such that the wiring is in direct contact with the atmosphere, subsequently arranging a metal frame along the perimeter, and finally said check means are covered by means of a sector of an insulating flexible material or fire-retardant mat around the check means fixed by placing mechanical securing means.

18. wiring a second layer of ceramic mat and is fixed, for example by means of detachable strips, but this is not sealed so as to allow its opening, making up for said lack of sealing by oversizing the mat with respect to the hole made in the mat.
